# EUROPÄISCHE PATENTSCHRIFT

(11) **EP 4 347 089 B1**
(45) Veröffentlichungstag und Bekanntmachung des Hinweises auf die Patenterteilung: **19.03.2025**
(21) Anmeldenummer: 22728516.0
(22) Anmeldetag: 10.05.2022
(51) Int. Cl.: B01D 45/08, B05B 14/44, B05B 14/43

(54) **FARBNEBELABSCHEIDEVORRICHTUNG ZUR ANBRINGUNG AN EINEM ALS FARBNEBELABSCHEIDER FUNGIERENDEN FILTER- UND/ODER ABSCHEIDEMODUL**
PAINT MIST SEPARATOR DEVICE FOR ATTACHING TO A FILTER AND/OR SEPARATOR MODULE FUNCTIONING AS A PAINT MIST SEPARATOR
DISPOSITIF DE SÉPARATION DE BROUILLARD DE PEINTURE DESTINÉ À ÊTRE FIXÉ À UN MODULE DE FILTRATION ET/OU DE SÉPARATION FONCTIONNANT COMME SÉPARATEUR DE BROUILLARD DE PEINTURE

(30) Priorität: 28.05.2021 DE 202021102947 U
(43) Veröffentlichungstag der Anmeldung: 10.04.2024
(73) Patentinhaber: Neufilter GmbH, 48599 Gronau (DE)
(72) Erfinder: BÖING, Thomas, 48599 Gronau (DE); HENKE, Daniel, 48599 Gronau (DE)
(74) Vertreter: Werner & ten Brink PAe PartGes mbB Bentheim
(86) Internationale Anmeldenummer: PCT/EP2022/062599
(87) Internationale Veröffentlichungsnummer: WO 2022/248212

(56) Entgegenhaltungen:
- WO-A2-01/37972
- CN-A- 110 676 594
- CN-U- 209 985 061
- US-A1- 2018 356 119
- US-A1- 2021 046 412

## Beschreibung

Die Erfindung betrifft das technische Gebiet des Abscheidens von mit einem Luftstrom (Rohgasstrom) mitgeführten Partikeln, nämlich das Abscheiden von mit einem sogenannten Farbnebel mitgeführten Farb- oder Lackpartikeln (Farbnebelabscheidung).

Vorrichtungen zu diesem Zweck sind bereits bekannt, zum Beispiel in Form des in der EP 2 532 409 B beschriebenen Filtermoduls.

Eine Aufgabe der vorliegenden Erfindung besteht darin, die Abscheidung von im Weiteren mitunter kurz nur als Partikel bezeichneten Farb- oder Lackpartikeln noch weiter zu verbessern. Diese Aufgabe wird erfindungsgemäß im Wege einer Verwendung einer mitunter kurz als Vorrichtung bezeichneten Farbnebelabscheidevorrichtung mit den Merkmalen des Anspruchs 1 gelöst. Eine solche Vorrichtung ist zur Anbringung außen vor oder außen vor sowie außen an einem selbst als Farbnebelabscheider fungierenden Filter- und/oder Abscheidemodul - im Folgenden oftmals kurz und zusammenfassend als Filtermodul bezeichnet - bestimmt, zum Beispiel einem Filtermodul gemäß der EP 2 532 409 B. Die Vorrichtung ist zur Verwendung mit und zur Anbringung außen vor oder außen vor sowie außen an einem solchen Filtermodul eingerichtet. Für eine solche Anbringung weist die Vorrichtung entsprechende Mittel auf, nämlich Laschen, welche in Eingriff mit einer Einströmöffnung im jeweiligen Filtermodul gebracht oder in einen Spalt zwischen dem Filtermodul und einem das Filtermodul aufnehmenden Gehäuse eingesteckt werden können und zur Anbringung der Vorrichtung außen an dem Filtermodul dort zum Beispiel eingesteckt werden bzw. sind.

Bezüglich des Orts der Anbringung der Vorrichtung (Farbnebelabscheidevorrichtung) ist eine Anbringung entweder außen vor sowie außen an einem jeweiligen Filtermodul ("außen vor und außen an" oder kurz: "außen vor und an" oder "außen an und vor") oder alternativ außen vor ("außen vor") einem jeweiligen Filtermodul vorgesehen.

Jedenfalls ist eine Anbringung in einem Strömungsweg eines Rohgasstroms, wie es sich bei einer bestimmungsgemäßen Verwendung des Filter- und/oder Abscheidemoduls ergibt (eines bei einer bestimmungsgemäßen Verwendung des Filter- und/oder Abscheidemoduls resultierenden Rohgasstroms), durch das Filter- und/oder Abscheidemodul hindurch vorgesehen. Dies meint, dass sich die Vorrichtung in einem Strömungsweg befindet, welcher durch das Filtermodul hindurchführt, und sich in Richtung dieses Strömungswegs vor dem Filtermodul befindet, sich also stromaufwärts des Filtermoduls befindet. Eine andere Möglichkeit zur Bestimmung des Anbringungsorts "außen vor dem Filtermodul" oder "außen an dem Filtermodul" bezieht sich auf eine sogenannte Dichtungsebene des Filtermoduls. Ein Filtermodul wird üblicherweise auf der dem Rohgasstrom zugewandten Seite (Frontseite; Seitenfläche mit der Einströmöffnung) zu den jeweils randseitig anschließenden Flächen, zum Beispiel einem Gehäuse, abgedichtet. Zum Abdichten kommt zum Beispiel ein Abkleben zu den randseitig anschließenden Flächen in Betracht. Die jeweilige Dichtung definiert zusammen mit der Frontseite des Filtermoduls die Dichtungsebene. Ein vor dem Filtermodul platzierter Vorabscheider befindet sich vor der Dichtungsebene (stromaufwärts der Dichtungsebene).

Eine Anbringung außen vor einem jeweiligen Filtermodul meint eine Anbringung, bei welcher die Vorrichtung mit dem Filtermodul direkt oder zumindest indirekt in Kontakt ist.

Eine Anbringung außen an einem Filtermodul und vor dem Filtermodul meint, dass die an dem Filtermodul angebrachte ("außen an") Vorrichtung aufgrund der Anbringung direkt mit dem Filtermodul in Kontakt ist, sich aber ganz oder zumindest im Wesentlichen außerhalb des Filtermoduls, aber jedenfalls wie oben beschrieben vor dem Filtermodul befindet ("außen vor").

Die Farbnebelabscheidevorrichtung ist also bei beiden Anbringungssituationen zur Anbringung außen vor einem jeweiligen Filtermodul bestimmt und befindet sich im angebrachten Zustand außen vor dem Filtermodul. Die Anbringung oder Anbringungsmöglichkeit außen an einem jeweiligen Filtermodul impliziert stets eine Anbringung/Anbringungsmöglichkeit vor dem jeweiligen Filtermodul und dementsprechend wird im Folgenden mitunter nicht in jedem Falle erwähnt, dass sich die Farbnebelabscheidevorrichtung dann auch im oben beschriebenen Sinne vor dem Filtermodul befindet oder für eine solche Position bestimmt ist. Dies ist stets mitzulesen.

Die Vorrichtung (Farbnebelabscheidevorrichtung) kommt bei einer Anbringung außen an oder zumindest außen vor einem jeweiligen Filtermodul zuerst mit einem das jeweilige Filtermodul anströmenden Rohgasstrom in Kontakt. Die Vorrichtung fungiert also in Bezug auf das in Strömungsrichtung des Rohgasstroms hinter (stromabwärts) der Vorrichtung liegende Filtermodul als eingangsseitige oder vorgelagerte Abscheidestufe und wird entsprechend im Weiteren oftmals auch als Vorabscheider bezeichnet. Im Folgenden bezeichnen die Begriffe Vorrichtung, Farbnebelabscheidevorrichtung und Vorabscheider also dasselbe und bei jeder Verwendung eines dieser Begriff sind entsprechend die anderen Begriffe oder der Ausdruck "Farbnebelabscheidevorrichtung zur Anbringung an oder zumindest vor einem Filtermodul" stets mitzulesen. Die Farbnebelabscheidevorrichtung kann auch als Prallabscheider bezeichnet werden und fungiert als Prallabscheider.

Die Vorrichtung (der Vorabscheider) umfasst zumindest eine Zentralfläche sowie jeweils seitlich an die Zentralfläche anschließende Seitenflächen und die Vorrichtung (der Vorabscheider) ist mittels der Enden der Seitenflächen außen am (am und vor) oder außen vor dem jeweiligen Filtermodul anbringbar, insbesondere lösbar anbringbar. Zur Verwendung der Vorrichtung (des Vorabscheiders) zusammen mit einem jeweiligen Filtermodul wird die Vorrichtung (der Vorabscheider) außen an (an und vor) dem Filtermodul, jedenfalls aber vor dem Filtermodul angebracht.

Im Betrieb lagert sich am Vorabscheider bereits ein Teil der mit dem Rohgasstrom mitgeführten Partikel ab, so dass die Funktion der Vorabscheidung gewährleistet ist. In Strömungsrichtung im Anschluss an den Vorabscheider gelangt der anströmende Rohgasstrom - wie bisher - durch eine Einströmöffnung im jeweiligen Filtermodul in das Innere des Filtermoduls und streicht dabei zumindest über zumindest eine Kante der Zentralfläche des Vorabscheiders (oder zumindest eine Kante der Zentralfläche sowie jeweils zumindest eine Kante der Seitenflächen des Vorabscheiders). Dies führt zumindest zum Teil zu einer Umlenkung, insbesondere einer mehrfachen Umlenkung des Rohgasstroms und aus einer zuvor (vor dem Vorabscheider) ggf. laminaren oder zumindest im Wesentlichen laminaren Strömung wird zumindest lokal (im Bereich der Kante/Kanten des Vorabscheiders) eine turbulente Strömung mit Wirbeln. Solche Wirbel begünstigen die Abscheidung im Bereich der Wirbelbildung und damit im Bereich des Vorabscheiders.

Der Vorteil der Vorrichtung und damit auch der Vorteil der Verwendung einer solchen Vorrichtung besteht darin, dass aufgrund von deren Anordnung/Platzierbarkeit jedenfalls vor einem Filtermodul an der Vorrichtung bereits ein Teil von mit dem Rohgasstrom mitgeführten Partikeln abgeschieden wird (Funktion als Vorabscheider). Dies erhöht die sogenannte Standzeit des stromabwärts nachfolgenden Filtermoduls, das ansonsten ggf. als einzige Abscheidevorrichtung fungiert. Wenn oder indem die vorgeschlagene Vorrichtung von dem jeweiligen Filtermodul entfernt werden kann, sobald die Vorrichtung in einem gewissen Umfang mit abgeschiedenen Partikeln beladen ist, kann das jeweilige Filtermodul danach entweder alleine oder mit einer neuen Vorrichtung weiter verwendet werden. Bevorzugt ist die Zentralfläche im an oder zumindest vor dem jeweiligen Filtermodul angebrachten Zustand quer oder zumindest im Wesentlichen quer zu dem anströmenden Rohgasstrom ausgerichtet und der Rohgasstrom trifft frontal auf die Zentralfläche (Prallfläche; Funktion des Vorabscheiders als Prallabscheider) des Vorabscheiders. Die an die Zentralfläche anschließenden Seitenflächen erlauben die Anbringung zumindest vor dem jeweiligen Filtermodul, fallweise auch die Anbringung vor und an dem jeweiligen Filtermodul.

Bei der patentamtlichen Recherche zu der prioritätsbegründenden deutschen Gebrauchsmusteranmeldung (DE 20 2021 102 947.1) wurden zum Stand der Technik die DE 10 2009 022 459 A1 und die CN 209 985 061 U1 ermittelt.

Aus der DE 10 2009 022 459 A1 ist ein Vorabscheider für die An- bzw. Absaugöffnung von Sprühnebel-Absauganlagen bekannt. Dabei handelt es sich um zwei Ebenen mit halbrohrförmigen Prallsegmenten, wobei die jeweiligen Halbrohre mit ihren offenen Seiten einander zugewandt sind. Der bekannte Vorabscheider weist also keine Zentralfläche, sondern eine Vielzahl von Prallsegmenten auf, weist folglich keine an eine Zentralfläche anschließenden Seitenflächen auf und ist auch nicht mittels solcher Seitenflächen zur Anbringung an einem Filter- und/oder Abscheidemodul vorgesehen.

Aus der CN 209 985 061 U1 ist eine Konfiguration bekannt, deren Komponenten im weitesten Sinne als Filter- und/oder Abscheidemodul sowie als Farbnebelabscheidevorrichtung im Sinne der hier vorgelegten Beschreibung angesehen werden können. Die dortige Farbnebelabscheidevorrichtung ist aber nicht an dem dortigen Filter- und/oder Abscheidemodul anbringbar und vor allem weist die dortige Farbnebelabscheidevorrichtung keine an eine Zentralfläche anschließenden Seitenflächen auf, mittels derer eine Anbringung an einem Filter- und/oder Abscheidemodul erfolgen könnte.

Die US 2021/046412 A1 offenbart die Verwendung einer ebenen Einheit ("entry plate") vor einem Filterelement. Die ebene Einheit weist keine Laschen oder dergleichen zum Anbringen an oder vor dem Filterelement auf.

Aus der DE 10 2014 003 608 A1 ist ein Filtermodul für einen Farbnebelabscheider bekannt. Das Filtermodul umfasst ein Filtergehäuse zur Aufnahme eines Filterkörpers. Der Filterkörper umfasst Filtereinheiten mit ebenen Zentralflächen. Die Filtereinheiten werden von einer Staubluftseite in das Filtergehäuse eingesetzt und damit nicht außen an oder außen vor dem Filtermodul angebracht und zudem weisen die Filtereinheiten keine Laschen zum Einstecken in eine Einströmöffnung oder in einen Spalt zwischen dem Filtermodul und einem äußeren Gehäuse auf.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bezüglich des Vorabscheiders ist vorgesehen, dass dieser Laschen am freien Ende jeder Seitenfläche aufweist oder dass die Seitenflächen in solche Laschen auslaufen, also der endständige Abschnitt der jeweiligen Seitenfläche die Lasche bildet. Bezüglich dieser Laschen ist vorgesehen, dass diese als die weiter oben genannten Mittel zur lösbaren Anbringung außen vor oder an einem Filtermodul fungieren.

Bei einem zur Anbringung außen vor sowie außen an einem Filtermodul bestimmten Vorabscheider fungieren diese Laschen als Mittel zum lösbaren Anbringen außen am und außen vor dem jeweiligen Filtermodul. Der Vorabscheider ist dabei zum Beispiel mittels eines Eingriffs der genannten Mittel, nämlich der Laschen, in eine Einströmöffnung im jeweiligen Filtermodul außen am und außen vor dem jeweiligen Filtermodul anbringbar. Bei einem zur Anbringung außen vor einem Filtermodul bestimmten Vorabscheider fungieren diese Laschen als Mittel zum lösbaren Anbringen außen vor dem jeweiligen Filtermodul. Der Vorabscheider ist dabei zum Beispiel lösbar vor dem jeweiligen Filtermodul anbringbar ("außen vor"), indem die Laschen in einen Spalt einsteckbar sind, welcher zwischen dem Filtermodul und einem das Filtermodul umgebenden Gehäuse verbleibt.

Optional ist bezüglich des Vorabscheiders vorgesehen, dass die Laschen hakenförmig sind. Solche Laschen erlauben bei einer Anbringung außen an und außen vor einem Filtermodul zum Beispiel ein Einhängen in die Einströmöffnung des Filtermoduls, wobei die hakenförmigen Laschen über oder hinter einen Teil des Rands um die Einströmöffnung greifen. Bei einer Anbringung außen vor einem Filtermodul erlauben solche hakenförmige Laschen zum Beispiel ein Einhängen des Vorabscheiders an dafür vorgesehenen Zapfen oder dergleichen in dem Spalt zwischen Filtermodul und umgebendem Gehäuse. Nochmals weiter optional ist bezüglich des Vorabscheiders vorgesehen, dass dieser einstückig ist und Knickstellen innerhalb der Gesamtoberfläche des Vorabscheiders frontseitige Kanten des Vorabscheiders sowie eine Grenze zwischen der Zentralfläche und jeweils einer Seitenfläche bilden. Besonders bevorzugt ist vorgesehen, dass der Vorabscheider dafür Perforationen aufweist, welche ein bestimmungsgemäßes Knicken erleichtern und den Ort der Knickstellen passgenau bestimmen. Als Material für den Vorabscheider kommt zum Beispiel Karton, Pappe (insbesondere Vollpappe oder Wellpappe), Kunststoff, Metall oder dergleichen in Betracht.

Optional haben die Seitenflächen des einstückigen oder ggf. auch eines mehrteiligen Vorabscheiders eine dreieckige oder zumindest im Wesentlichen dreieckige Form. Für eine Hüllkontur des Vorabscheiders ergibt sich damit insgesamt die geometrische Form eines geraden Prismas mit einer dreieckigen oder im Wesentlichen dreieckigen Grundfläche (die Seitenflächen des Vorabscheiders sind die Grundflächen der geometrischen Form des Prismas), also eine Form wie zum Beispiel bei der Frontseite einer Schüttmulde. Jedenfalls ergibt sich bei einer solchen Form im Bereich der von den Spitzen der dreieckigen oder im Wesentlichen dreieckigen Seitenflächen abgewandten Kanten der Seitenflächen ein von diesen Kanten (sowie von der Oberkante der Zentralfläche und der Frontseite des jeweiligen Filtermoduls) begrenzter Einströmbereich. Auf der gegenüberliegenden Seite, also im Bereich der Spitzen oder der kürzesten Kanten der dreieckigen oder im Wesentlichen dreieckigen Seitenflächen schließt eine dortige Unterkante der Zentralfläche an die Frontseite des jeweiligen Filtermoduls an (und reicht bei einer speziellen, optionalen und weiter unten beschriebenen Ausführungsform mittels einer an die Zentralfläche anschließenden Lasche sogar in das Filtermodul hinein) oder schließt zumindest im Wesentlichen an diese Frontseite an. Im angebrachten Zustand ist ein Vorabscheider mit solchen dreieckigen oder zumindest im Wesentlichen dreieckigen Seitenflächen zum Beispiel so orientiert, dass die Spitzen der Seitenflächen oder die kürzesten Kanten der Seitenflächen nach unten, also in Richtung der Gravitationswirkung orientiert sind, wobei genauso auch eine Orientierung genau anders herum (also um 180° gedreht), aber ebenso eine Drehung um 90° oder 270° möglich ist.

Alternativ zu dreieckigen oder zumindest im Wesentlichen dreieckigen Seitenflächen kommen auch rechteckige oder zumindest im Wesentlichen rechteckige Seitenflächen in Betracht. Dann bilden die nach oben weisenden Kanten der Seitenflächen und die nach oben weisende Kante der Zentralfläche eine Oberkante des Vorabscheiders und die entsprechenden unteren Kanten eine Unterkante des Vorabscheiders und diese begrenzen zusammen mit der Frontseite des jeweiligen Filtermoduls einen oberen bzw. unteren Einströmbereich.

Optional ist bezüglich des Vorabscheiders vorgesehen, dass dessen Zentralfläche eine von einer Seitenfläche zur gegenüberliegenden Seitenfläche gemessene Breite aufweist, die der Breite einer Einströmöffnung im jeweiligen Filtermodul oder zumindest im Wesentlichen dieser Breite entspricht und dass die Vorrichtung (der Vorabscheider) mittels eines Eingriffs in diese Einströmöffnung, insbesondere mittels eines Eingriffs der Laschen in diese Einströmöffnung, am jeweiligen Filtermodul anbringbar ist. Mit einer solchen Breite, also einer Breite entsprechend der Breite der Einströmöffnung im jeweiligen Filtermodul, deckt der Vorabscheider die Einströmöffnung zumindest in dieser Dimension ab.

Nochmals weiter optional ist bezüglich dieser Ausführungsform des Vorabscheiders zudem vorgesehen, dass eine quer zu einer die Breite bestimmenden Achse der Zentralfläche (Achse von einer Seitenfläche zur gegenüberliegenden Seitenfläche) gemessene Höhe der Zentralfläche (in der Ebene der Zentralfläche gemessen) größer als die Höhe der Einströmöffnung im jeweiligen Filtermodul ist. Optional ist diese Höhe der Zentralfläche zumindest so groß, dass bei einer Orthogonalprojektion der Vorrichtung (des Vorabscheiders) auf die Frontseite des jeweiligen Filtermoduls mit der dortigen Einströmöffnung eine Oberkante der Zentralfläche zumindest mit der Oberkante der Einströmöffnung zusammenfällt oder im Wesentlichen mit dieser Oberkante zusammenfällt. Dann deckt der Vorabscheider die Einströmöffnung in zwei Dimensionen, also in den beiden die Größe der Einströmöffnung bestimmenden Dimensionen, ab und entsprechend ist die Funktion als Vorabscheider besonders gut gewährleistet. Die quer zu deren Breite gemessene Höhe der Zentralfläche kann optional auch noch größer als zuvor beschrieben sein, so dass bei einer Orthogonalprojektion die Oberkante der Zentralfläche über der Oberkante der Einströmöffnung liegt. Dies gewährleistet auf der einen Seite eine vollständige Abdeckung der Einströmöffnung durch den Vorabscheider und führt auf der anderen Seite zu einer nochmals stärkeren Umlenkung des anströmenden Rohgasstroms und einer entsprechend verstärkten Wirbelbildung im Rohgasstrom beim Überstreichen der Oberkante(n) des Vorabscheiders und beim Einströmen in das Filtermodul, wobei solche Wirbel die Abscheidung im Bereich der Wirbelbildung und damit im Bereich des Vorabscheiders begünstigen.

Für eine besonders belastbare Anbringung des Vorabscheiders an einem jeweiligen Filtermodul sind vorteilhaft zumindest einseitig hakenförmige Laschen vorgesehen. Eine solche Hakenform ergibt sich zum Beispiel mittels jeweils eines Schlitzes in einer Lasche, bei einer mit einer Knickstelle an eine jeweilige Seitenfläche anschließenden Lasche insbesondere im Bereich einer solchen Knickstelle.

Die bei der Verwendung der Vorrichtung als Vorabscheider angeströmten Flächen, also zumindest die Zentralfläche und zumindest zum Teil auch die Seitenflächen, können bei einer vorteilhaften Ausführungsform strukturiert sein, also eine Oberfläche aufweisen, die von einer ebenen und/oder geschlossenen Oberfläche abweicht. Eine solche strukturierte Oberfläche erhöht die zur Abscheidung wirksame Oberfläche. Die Strukturierung besteht zum Beispiel in Form von Löchern in der Zentralfläche und/oder der Seitenflächen.

Ein weiterer Vorteil der Verwendung der hier vorgeschlagenen Vorrichtung (des Vorabscheiders) besteht darin, dass mittels der Vorrichtung (des Vorabscheiders) eine Verwirbelung des Rohgasstroms auf der Eingangsseite des jeweiligen Filtermoduls stattfindet und damit eine Schwerpunktbildung bezüglich eines Auftrefforts oder eines Auftreffbereichs des Rohgasstroms auf die dem anströmenden Rohgasstrom zugewandte Fläche des Filtermoduls vermieden wird.

Die Farbnebelabscheidevorrichtung (der Vorabscheider/die Vorrichtung) ist nach dem hier vorgeschlagenen Ansatz zum Abscheiden von mit einem Luftstrom (Rohgasstrom) mitgeführten Partikeln bestimmt, jedenfalls handelt es sich nicht um eine Vorrichtung zum Abscheiden von beispielsweise von einer Flüssigkeit mitgeführtem Material. Als Farbnebelabscheidevorrichtung bewirkt diese eine Abscheidung der von einem Luftstrom (Rohgasstrom) mitgeführten Partikel an zumindest einer Oberfläche und hält damit zumindest einen Teil der von dem Rohgasstrom mitgeführten Partikel zurück.

Dies bewirkt bereits eine merkliche Reduktion von mit einem Rohgasstrom mitgeführten Partikeln auf einer sogenannten Reinluftseite der Farbnebelabscheidevorrichtung (die Reinluftseite - reinluftseitig - ist die stromabwärtige Seite, bezogen auf die Strömungsrichtung des Rohgasstroms) gegenüber einer stromaufwärtigen - rohgasseitigen, anströmseitigen - Partikelmenge.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen im Umfang der Ansprüche führen.

Es zeigen
- Figur 1: eine Vorrichtung - "Vorabscheider" - zur lösbaren Anbringung außen an einem Filter- und/oder Abscheidemodul,
- Figur 2: den Vorabscheider gemäß Figur 1 in flachem Zustand,
- Figur 3: den Vorabscheider gemäß Figur 1 und Figur 2 in einem an einem Filter- und/oder Abscheidemodul angebrachten Zustand,
- Figur 4: ein Filter- und/oder Abscheidemodul sowie einen Vorabscheider gemäß Figur 3, mit einem im Vergleich zu Figur 3 in einer anderen Orientierung angebrachten Vorabscheider,
- Figur 5: eine weitere Ausführungsform eines Vorabscheiders, wobei der Vorabscheider außen an einem Filter- und/oder Abscheidemodul angebracht ist,
- Figur 6: den Vorabscheider gemäß Figur 5 in flachem Zustand,
- Figur 7: eine weitere Ausführungsform eines Vorabscheiders, wobei der Vorabscheider außen vor einem Filter- und/oder Abscheidemodul angebracht ist,
- Figur 8: und
- Figur 9: eine Filtermodulwand mit jeweils mit einem Vorabscheider versehenen Filter- und/oder Abscheidemodulen.

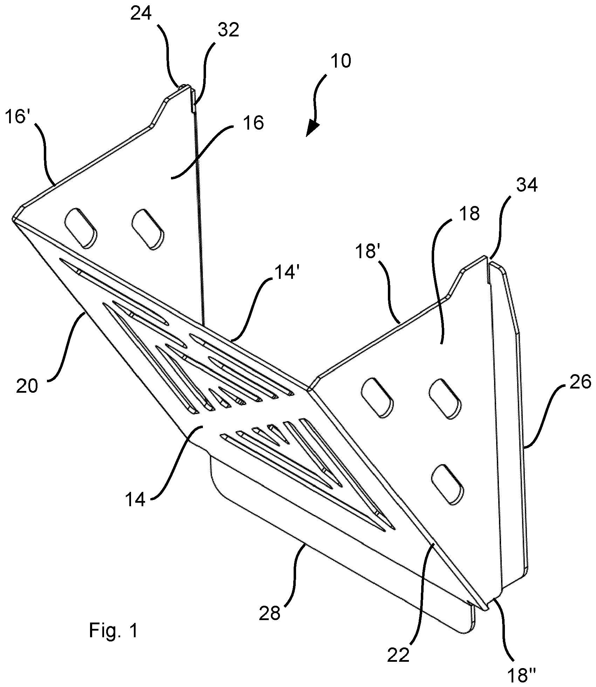

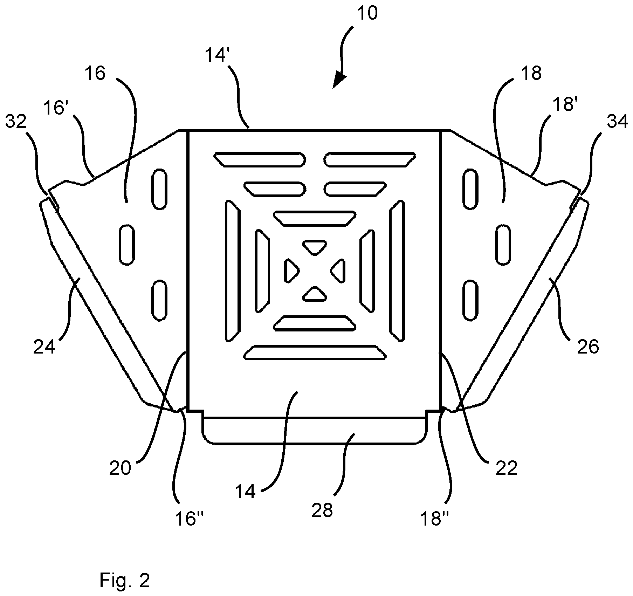

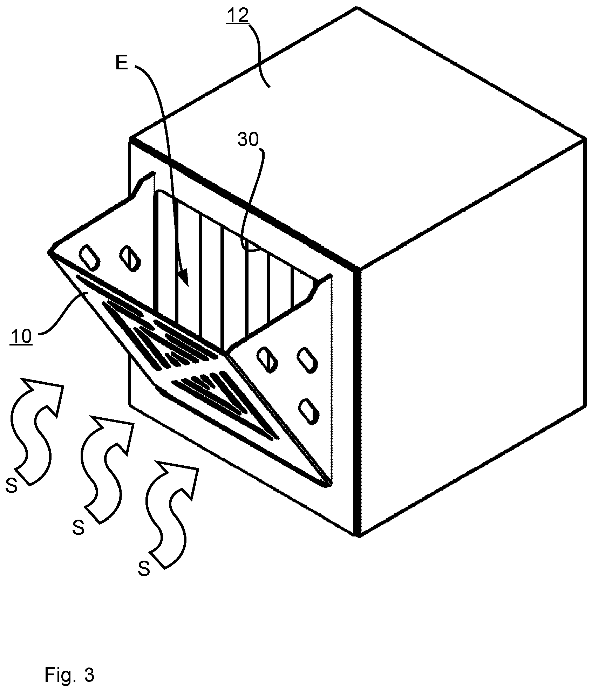

Die Darstellungen in Figur 1 und Figur 2 zeigen beispielhaft eine Ausführungsform einer im Folgenden aufgrund ihrer wesentlichen Funktion oftmals als Vorabscheider 10 bezeichneten Vorrichtung 10, nämlich zum einen (Figur 1) in einer isometrischen Ansicht und zum anderen (Figur 2) in einer Ansicht in flacher Form, wie sie zum Beispiel für einen Transport in Betracht kommt. Diese Vorrichtung 10 (der Vorabscheider 10) ist zur lösbaren Anbringung außen an einem hier oftmals kurz und zusammenfassend als Filtermodul 12 bezeichneten Filter- und/oder Abscheidemodul 12 (Figur 3) bestimmt und eingerichtet.

Soweit in der hier vorgelegten Beschreibung relative Begriffe wie oben und unten verwendet werden, bezieht sich dies auf eine übliche Verwendungs- und Einbausituation eines jeweiligen Filtermoduls 12, nämlich die in den Figuren gezeigte Orientierung. Das Anbringen eines Vorabscheiders 10 außen an oder vor einem jeweiligen Filtermodul 12 kann grundsätzlich auch in einer von der Verwendungs- und Einbausituation abweichenden Orientierung des jeweiligen Filtermoduls 12 erfolgen; das Filtermodul 12 ist dann im Vergleich zur Verwendungs- und Einbausituation gedreht. Bei einer solchen gedrehten Orientierung verändert sich entsprechend auch die Bedeutung solcher relativen Begriffe sowie die Bedeutung weiterer, auf solche Begriffe Bezug nehmender Begriffe, wie zum Beispiel "seitlich". Dies ist für die gesamte hier vorgelegte Beschreibung stets mitzulesen.

Die Vorrichtung 10 fungiert als dem Filtermodul 12 eingangsseitig - eingangsseitig in Bezug auf einen anströmenden und durch das Filtermodul hindurchgeleiteten Rohgasstrom S (Figur 3) - vorgelagerte Verwirbelungs- und Abscheidevorrichtung (Vorabscheider 10). Bei einem außen am Filtermodul 12 angebrachten Vorabscheider 10 - genauso bei einem außen vor dem Filtermodul 12 angebrachten Vorabscheider 10 - trifft der Rohgasstrom S, zum Beispiel ein mit Farbnebel (Overspray) oder dergleichen belasteter Luftstrom, welcher üblicherweise Partikel, insbesondere Partikel in Form von Farb- und/oder Lackpartikeln, mit sich führt, zunächst auf den Vorabscheider 10 und erst danach auf das Filtermodul 12. Dies bewirkt eine erste Abscheidung von mit dem Rohgasstrom S mitgeführten Partikeln bereits am Vorabscheider 10. Indem eine erste Abscheidung von Partikeln bereits am Vorabscheider 10 erfolgt, brauchen diese nicht im oder am Filtermodul 12 abgeschieden werden. Dadurch erhöht sich eine sogenannte Standzeit des Filtermoduls 12. Der Vorabscheider 10 kann immer wieder ausgetauscht und durch einen neuen Vorabscheider 10 ersetzt werden, wenn dies aufgrund der am Vorabscheider 10 abgeschiedenen Partikelmenge erforderlich wird. Ein Austausch des Filtermoduls 12 ist erst notwendig, wenn auch dies aufgrund der von diesem aufgenommenen Partikelmenge erforderlich wird. Dann können nacheinander weitere Vorabscheider 10 mit einem solchen neuen Filtermodul 12 verwendet werden und so weiter.

Der Vorabscheider 10 umfasst zumindest eine Zentralfläche 14 sowie seitlich an die Zentralfläche 14 anschließende Seitenflächen 16, 18. Mittels dieser Seitenflächen 16, 18, insbesondere mittels der Enden dieser Seitenflächen 16, 18, ist diese Ausführungsform des Vorabscheiders 10 außen am jeweiligen Filtermodul 12 (Filter- und/oder Abscheidemodul 12) anbringbar und wird zur Verwendung mit einem solchen Filtermodul 12 außen an diesem angebracht und ist bei der Verwendung des Filtermoduls 12 zusammen mit dem Vorabscheider 10 außen am jeweiligen Filtermodul 12 angebracht, wie dies beispielhaft in der Darstellung in Figur 3 gezeigt ist.

Vorteilhaft ist der Vorabscheider 10, wie dies bei der Ausführungsform gezeigt ist, einstückig und besteht zum Beispiel aus Karton, Pappe (insbesondere Vollpappe oder Wellpappe), Kunststoff, Metall oder dergleichen. Vorteilhaft ist, wie dies bei der Ausführungsform ebenfalls gezeigt ist, zumindest die Zentralfläche 14 ein ebener Abschnitt des Vorabscheiders 10, wobei die Bezeichnung als eben bedeutet, dass sich die Zentralfläche 14 im Wesentlichen (abgesehen von einer durch eine jeweilige Materialstärke bestimmten Dicke) nur in zwei Dimensionen erstreckt. Bei der gezeigten Ausführungsform gilt dies auch für die Seitenflächen 16, 18.

Am Übergang von der Zentralfläche 14 auf jeweils eine Seitenfläche 16, 18 befinden sich bei einem einstückigen Vorabscheider 10 Knickstellen, insbesondere perforierte Knickstellen, die im Folgenden als frontseitige Kanten 20, 22 bezeichnet werden. Diese bestimmen neben der Fläche der Zentralfläche 14 und den Flächen der Seitenflächen 16, 18 die Grundform des Vorabscheiders 10 und bilden eine Grenze zwischen der Zentralfläche 14 und jeweils einer Seitenfläche 16, 18.

Die Seitenflächen 16, 18 haben vorteilhaft und wie bei der dargestellten Ausführungsform gezeigt, aber in grundsätzlich optionaler Art und Weise, eine dreieckige oder zumindest im Wesentlichen dreieckige Form. Bei einer (auch beim Ausführungsbeispiel gezeigten) im Wesentlichen dreieckigen Form fehlt für eine Dreiecksform eine echte Spitze. Jedenfalls weist jede Seitenfläche 16, 18 eine als Basis der dreieckigen oder zumindest im Wesentlichen dreieckigen Form anzusehende Seite und zwei weitere Seiten auf, die als an diese Basis anschließende Schenkel der dreieckigen oder zumindest im Wesentlichen dreieckigen Form anzusehen sind. Einer dieser Schenkel ist die Grenze zwischen der Zentralfläche 14 und der Seitenfläche 16, 18. Der andere Schenkel ist die Grenzlinie zu einer an die Seitenfläche 16, 18 anschließenden und als Moduleingriffsabschnitt fungierenden Lasche 24, 26. Bei jeder Seitenfläche 16, 18 ist - zumindest bei einer im Wesentlichen dreieckigen Form - eine von der Grenze (frontseitige Kante 20, 22) mit der Zentralfläche 14 ausgehende Kante länger als die andere von eben dieser Grenze ausgehende Kante derselben Seitenfläche 16, 18. Diese längere Kante wird im Folgenden zur Unterscheidung als obere Kante 16', 18' (obere Kante/Oberkante 16', 18' der Seitenfläche 16, 18) bezeichnet und diese kürzere Kante wird im Folgenden entsprechend als untere Kante 16", 18" (untere Kante/Unterkante 16", 18" der Seitenflächen 16, 18) bezeichnet; in der Darstellung in Figur 1 ist die untere Kante 16" der dort im Hintergrund liegenden Seitenfläche 16 verdeckt (s. Figur 2). Die Länge der unteren Kante 16", 18" kann so kurz sein, dass von einer eigentlichen Kante keine Rede mehr sein kann. Dann ist die Seitenfläche 16, 18 nicht mehr im Wesentlichen dreieckig, sondern echt dreieckig. Mit der Bezeichnung zweier Kanten der Seitenflächen 16, 18 als obere und untere Kanten 16', 18', 16", 18" kann auch eine entsprechende Benennung der Kanten der Zentralfläche 14 erfolgen. Eine obere Kante 14' (Oberkante 14') der Zentralfläche 14 ist entsprechend eine Kante dieser Zentralfläche 14, welche an die oberen Kanten 16', 18' der Seitenflächen 16, 18 anschließt. Die der oberen Kante 14' gegenüberliegende Kante der Zentralfläche 14 ist entsprechend deren untere Kante (Unterkante).

Die obere Kante 14' der Zentralfläche 14 und die oberen Kanten 16', 18' der beiden Seitenflächen 16, 18 bilden zusammen eine obere Kante oder die oberen Kanten des Vorabscheiders 10 und begrenzen im an einem Filtermodul 12 angebrachten Zustand zusammen mit dem Filtermodul 12, nämlich einer Frontseite des Filtermoduls 12 (Frontseite in Bezug auf eine Anströmrichtung im Betrieb), einen Einströmbereich E (Figur 3), nämlich einen Einströmbereich E in den von der Zentralfläche 14 und den beiden Seitenflächen 16, 18 des Vorabscheiders 10 sowie der Frontseite des Filtermoduls 12 begrenzten Bereich. Über den Einströmbereich E (oder zumindest im Wesentlichen über den Einströmbereich E) strömt der Rohgasstrom S in den so begrenzten Bereich und von dort über eine Einströmöffnung 30 in der Frontseite des Filtermoduls 12 in das Innere des Filtermoduls 12 (in der Darstellung in Figur 3 ist im Bereich der Einströmöffnung 30 und aufgrund der Einströmöffnung 30 das im Innern des Filtermoduls 12 platzierte Filter- und/oder Abscheidemedium sichtbar, bei dem es sich zum Beispiel um ein Papiergelegefilter (siehe EP 2 532 409 B) handelt).

Bei der gezeigten Ausführungsform weist der Vorabscheider 10 an einem als freies Ende bezeichneten Ende jeder Seitenfläche 16, 18 und/oder an der unteren Kante der Zentralfläche 14 jeweils (insbesondere einstückig) mit der jeweiligen Seitenfläche 16, 18 bzw. der Zentralfläche 14 verbundene und als Moduleingriffsabschnitte fungierende Laschen 24, 26, 28 auf (eine Lasche 24 ist in der Darstellung in Figur 1 zum Teil verdeckt; s. Figur 2). Die betreffenden Enden der Seitenflächen 16, 18 sind freie Enden, weil diese nicht an die Zentralfläche 14, von der die Seitenflächen 16, 18 selbst ausgehen, angrenzen.

Diese Laschen 24, 26, 28 sind zum lösbaren Anbringen außen am jeweiligen Filtermodul 12 bestimmt und damit zum lösbaren Anbringen der Vorabscheiders 10 insgesamt am jeweiligen Filtermodul 12. Bei einem einstückigen Vorabscheider 10 besteht eine Grenzlinie zwischen jeweils einer Lasche 24, 26, 28 und der jeweiligen Seitenfläche 16, 18 bzw. der Zentralfläche 14 in Form einer (optional perforierten) Knickstelle. Mittels dieser Laschen 24, 26, 28 wird der Vorabscheider 10 an oder in einer dafür bestimmten Ausnehmung oder dafür bestimmten Ausnehmungen im jeweiligen Filtermodul 12 angebracht, insbesondere eingesetzt. Dabei greifen die Laschen 24, 26, 28 zumindest zum Teil in das Filtermodul 12 ein; die Laschen 24, 26, 28 fungieren also als Moduleingriffsabschnitte. Dies ändert nichts an der Anbringung des Vorabscheiders 10 außen am Filtermodul 12, denn die Anbringung erfolgt von außen und die zur Vorabscheidung wirksamen Flächen befinden sich außerhalb des Filtermoduls 12.

Als Filtermodul 12 kommt zum Beispiel ein Filtermodul in Betracht, wie dies aus der EP 2 532 409 B bekannt ist, welche mit diesem Hinweis mit ihrem vollständigen Offenbarungsgehalt als in die hier vorgelegte Beschreibung einbezogen gelten soll. Dieses Filtermodul 12 weist auf seiner Front- oder Eingangsseite eine in der EP 2 532 409 B als Einströmöffnung bezeichnete Öffnung für den anströmenden Rohgasstrom auf. In der Darstellung in Figur 3 ist die Einströmöffnung 30 gezeigt. Andere Filtermodule weisen auf einer dortigen Front- oder Eingangsseite ebenfalls eine entsprechende Öffnung als Einströmöffnung auf.

Die Darstellung in Figur 3 zeigt schematisch vereinfacht ein Filtermodul 12 gemäß der EP 2 532 409 B und eine Randlinie von dessen Einströmöffnung 30 ist in der Darstellung in Figur 2 mit der entsprechenden Bezugsziffer bezeichnet. Die Darstellung des Filtermoduls 12 als Darstellung des Filtermoduls 12 gemäß der EP 2 532 409 B ist ausdrücklich nur exemplarisch und der Vorabscheider 10 ist zur Verwendung mit grundsätzlich beliebigen Filtermodulen 12 bestimmt und geeignet. Im Interesse einer besseren Übersichtlichkeit der Darstellung wurde in Figur 3 auf die Bezugsziffern der einzelnen Elemente des Vorabscheiders 10 verzichtet. Insoweit wird auf die Darstellungen in Figur 1 und Figur 2 verwiesen.

Die Anbringung des Vorabscheiders 10 zur Verwendung mit einem jeweiligen Filtermodul 12, zum Beispiel einem Filtermodul 12 gemäß der EP 2 532 409 B, erfolgt bevorzugt an und/oder in der dortigen jeweiligen Einströmöffnung 30. Die Einströmöffnung 30 ist also ein Beispiel für die weiter oben erwähnte, zur Anbringung des Vorabscheiders 10 bestimmte Ausnehmung im jeweiligen Filtermodul 12. Die Anbringung an und/oder in der jeweiligen Einströmöffnung 30 erfolgt beispielsweise, indem die Laschen 24, 26, 28 von außen und durch die Einströmöffnung 30 in das Innere des Filtermoduls 12 geführt werden und im Innern des Filtermoduls 12 auf der Rückseite der die Einströmöffnung 30 begrenzenden Wandflächen eingesteckt und/oder auf die Rückseite der die Einströmöffnung 30 begrenzenden Wandflächen des Filtermoduls 12 umgeklappt werden. Ein solches Einstecken kommt zum Beispiel für die an die untere Kante der Zentralfläche 14 angrenzende Lasche 28 in Betracht und ein solches Umklappen kommt zum Beispiel für die an die freien Enden der Seitenflächen 16, 18 angrenzenden Laschen 24, 26 in Betracht.

Bei einer besonderen Ausführungsform des Vorabscheiders 10 ist vorgesehen, dass die an die freien Enden der Seitenflächen 16, 18 angrenzenden Laschen 24, 26 im weitesten Sinne hakenförmig sind, zum Beispiel indem der Vorabscheider 10 im Bereich der Grenzlinie zwischen einer Seitenfläche 16, 18 und der jeweils anschließenden Lasche 24, 26 Schlitze 32, 34 aufweist (eine die Schlitze 32, 34 einfassende Randkontur stellt im weitesten Sinn einen Haken dar). Diese Schlitze 32, 34 gehen von der oberen Kante 16', 18' der jeweiligen Seitenfläche 16, 18 aus und verlaufen entlang und in Richtung der vorgenannten Grenzlinie, also entlang der Knickstelle zwischen der Seitenfläche 16, 18 und der anschließenden Lasche 24, 26. Die Schlitze 32, 34 erstrecken sich nur über einen vergleichsweise kurzen Bereich dieser Grenzlinie und bei einer konkreten Ausführungsform liegt die Länge jedes Schlitzes 32, 34 zum Beispiel in einem Bereich von etwa einem Zentimeter bis etwa zwei Zentimetern oder in einem Bereich von etwa 1% bis etwa 5% der Länge dieser Grenzlinie.

Bevorzugt ist vorgesehen, dass ein Abstand zwischen einem unteren Ende der Schlitze 32, 34 - also gewissermaßen einem Boden der Schlitze 32, 34 - einerseits sowie der unteren Kante der Zentralfläche 14 andererseits der Höhe der Einströmöffnung 30 des jeweiligen Filtermoduls 12 entspricht oder zumindest im Wesentlichen entspricht. Als Höhe der Einströmöffnung 30 (Einströmöffnung 30 des Filtermoduls 12) wird die bei einem bestimmungsgemäß platzierten Filtermodul 12 in vertikaler Richtung (also in Richtung der Gravitationswirkung) gemessene Ausdehnung der Einströmöffnung 30 angesehen. Bezogen auf eine solche Position des Filtermoduls 12 können dann die Kanten der Einströmöffnung 30 als untere Kante, seitliche Kanten und obere Kante bezeichnet werden.

Das Anbringen eines Vorabscheiders 10 mit solchen Schlitzen 32, 34 erfolgt dann zum Beispiel, indem zunächst die an die Seitenflächen 16, 18 angrenzenden Laschen 24, 26 - diese zum Beispiel in einem nicht oder zumindest zunächst noch nicht abgeknickten Zustand, also in einer mit der jeweiligen Seitenfläche 16, 18 fluchtenden Orientierung - in die Einströmöffnung 30 eingeführt werden. Wegen des zumindest leichten Übermaßes des Vorabscheiders 10 wird dieser dabei schräg gehalten und im Bereich der Schlitze 32, 34 an die Oberkante der Einströmöffnung 30 im Filtermodul 12 geführt. Dort wird der Vorabscheider 10 nach oben (entgegengesetzt zur Richtung der Gravitationswirkung) geschoben, so dass die an die obere Kante der Einströmöffnung 30 angrenzenden Wandabschnitte des Filtermoduls 12 in die Schlitze 32, 34 eingreifen. Damit ist der Vorabscheider 10 bereits einseitig, nämlich im Bereich der oberen Kante der Einströmöffnung 30, am Filtermodul 12 angebracht. Nun wird der Vorabscheider 10 aus der bisher schrägen Orientierung verschwenkt und dabei oder zuvor die an die Zentralfläche 14 angrenzende Lasche 28 umgeknickt, so dass diese durch die Einströmöffnung 30 in das Filtermodul 12 eingeführt werden kann. Nach dem Einführen dieser Lasche 28 in die Einströmöffnung 30 und dem entsprechenden Abknicken der Lasche 28 entspannt sich die Knickstelle und die Lasche 28 liegt auf der Innenseite des Filtermoduls 12 an dem an die untere Kante der Einströmöffnung 30 angrenzenden Wandabschnitt des Filtermoduls 12 an oder zumindest teilweise an diesem Wandabschnitt an. Jetzt liegen auch die an die Seitenflächen 16, 18 angrenzenden Laschen 24, 26 vollständig im Innern des Filtermoduls 12 und diese klappen im Zuge einer Entspannung der dortigen Knickstellen im Innern des Filtermoduls 12 auf die Innenseite der die Einströmöffnung 30 seitlich begrenzenden Wandabschnitte des Filtermoduls 12 um oder werden in dieser Form umgeklappt.

Es sei darauf hingewiesen, dass es zum betriebsfertigen Anbringen eines Vorabscheiders 10 an einem Filtermodul 12 nicht erforderlich ist, dass dessen Laschen 24, 26, 28 allesamt oder einzelne der Laschen 24, 26, 28 vollflächig an der Innenseite der die Einströmöffnung 30 seitlich begrenzenden Wandabschnitte des Filtermoduls 12 anliegen. Vielmehr reicht es aus, wenn sich beim Entspannen der jeweiligen Knickstellen insgesamt eine Breite und Höhe des Vorabscheiders 10 ergeben, die größer als die Breite und die Höhe der Einströmöffnung 30 im Filtermodul 12 sind.

Zusätzlich zu einer Lasche 28 an der Zentralfläche 14 kommt auch - bei im Wesentlichen dreieckigen Seitenflächen 16, 18 - eine hakenförmige (nasenförmige) Gestaltung (nicht gezeigt) der kurzen, unteren Kanten 16", 18" der Seitenflächen 16, 18 in Betracht. Bei einer solchen Ausführungsform wird der Vorabscheider 10 nach dem Eingriff der entsprechenden Wandabschnitte des Filtermoduls 12 in dessen Schlitze 32, 34 (mit entsprechend tiefen Schlitzen 32, 34) so weit angehoben, dass der Haken (die Nase) der entsprechenden Kontur der kurzen Kanten 16", 18" der Seitenflächen 16, 18 über die untere Kante der Einströmöffnung 30 gehoben werden kann. Dann wird der Vorabscheider 10 mit dieser Kontur auf die untere Kante der Einströmöffnung 30 gedrückt oder abgelassen (oder der Vorabscheider 10 sinkt selbsttätig aufgrund seines Gewichts auf diese dann als Auflagefläche fungierende Kante). Dabei greift der Haken (die Nase) hinter die Innenseite des an die untere Kante der Einströmöffnung 30 angrenzenden Wandabschnitts des Filtermoduls 12 und auch damit ist der Vorabscheider 10 dann in seinem unteren Bereich an der Einströmöffnung 30 angebracht.

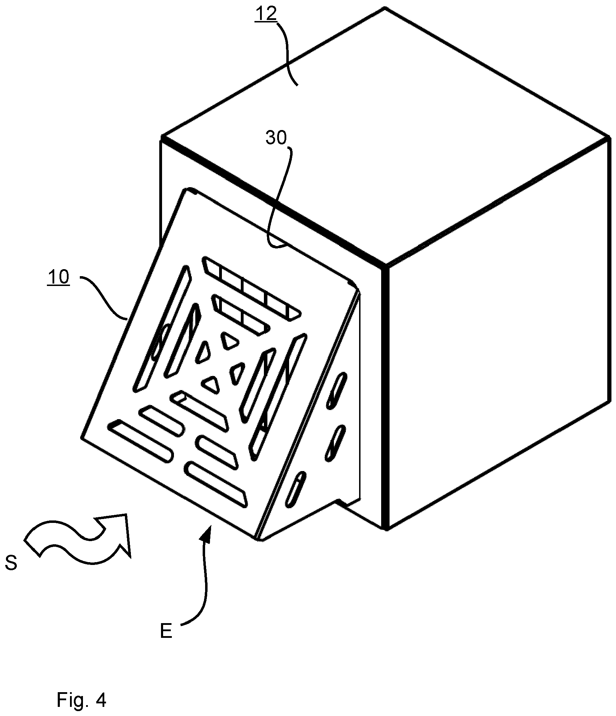

Die Darstellung in Figur 4 zeigt eine Situation, bei welcher der Vorabscheider 10 "anders herum", nämlich anders herum im Vergleich zu der Situation gemäß Figur 3, am Filtermodul 12 angebracht ist. Die Einströmöffnung 30 weist hier nach unten. Die Anbringung des Vorabscheiders 10 in einer solchen Orientierung entspricht der oben beschriebenen Anbringung mit dem Unterschied, dass der Vorabscheider 10 mit seinen Schlitzen 32, 34 an der unteren Kante der Einströmöffnung 30 eingehängt und die Lasche 28 der Zentralfläche 14 im Bereich der oberen Kante der Einströmöffnung 30 eingesteckt wird.

Die Verwendung eines Vorabscheiders 10 wie hier beschrieben kommt in unterschiedlichen Ausführungsformen in Betracht. Die Ausführungsformen unterscheiden sich dabei zum Beispiel in der Länge der langen Kanten 16', 18' der Seitenflächen 16, 18. Je länger diese langen Kanten 16', 18' sind, desto größer ist der Einströmbereich E. Vorabscheider 10 mit längeren oder kürzeren langen Kanten 16', 18' können in Abhängigkeit vom jeweiligen Anwendungsfall ausgewählt werden.

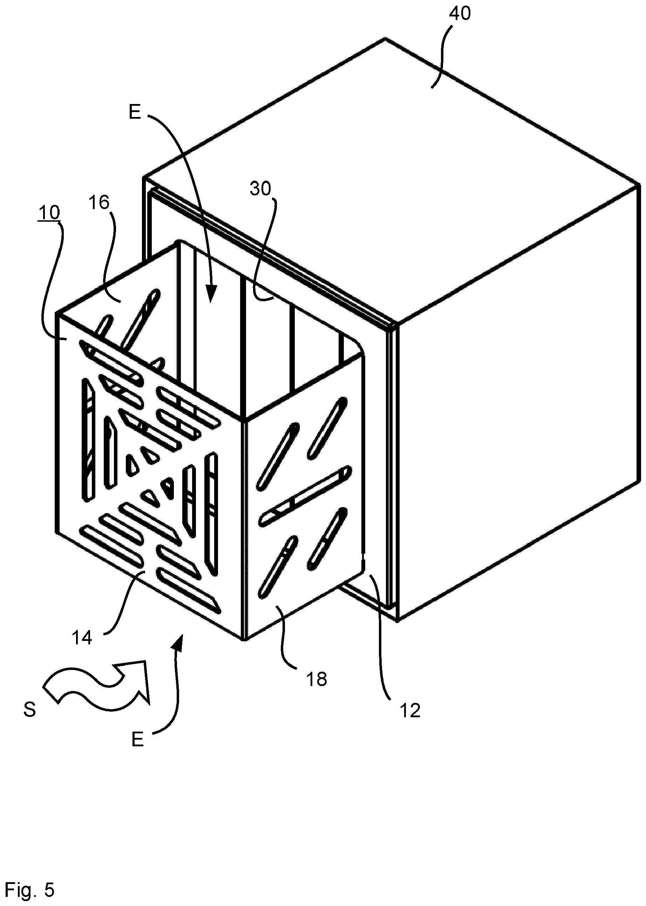

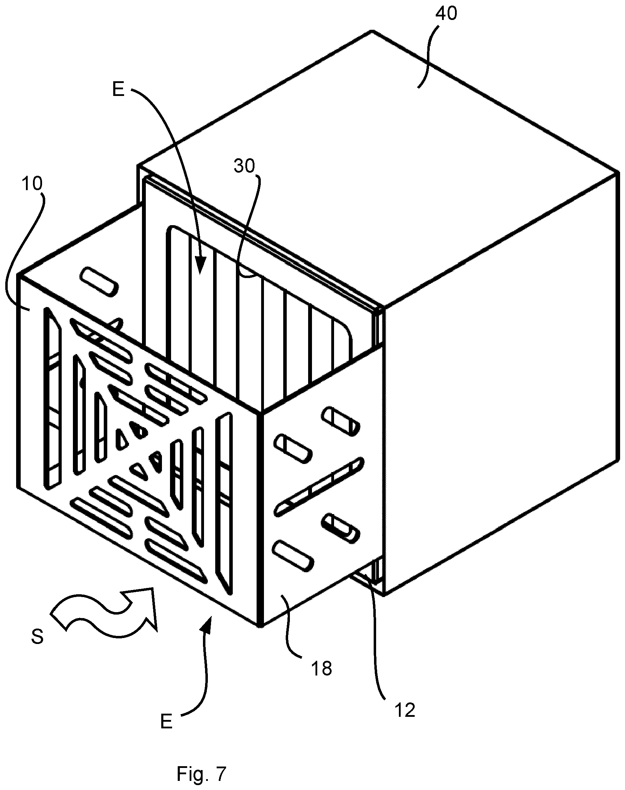

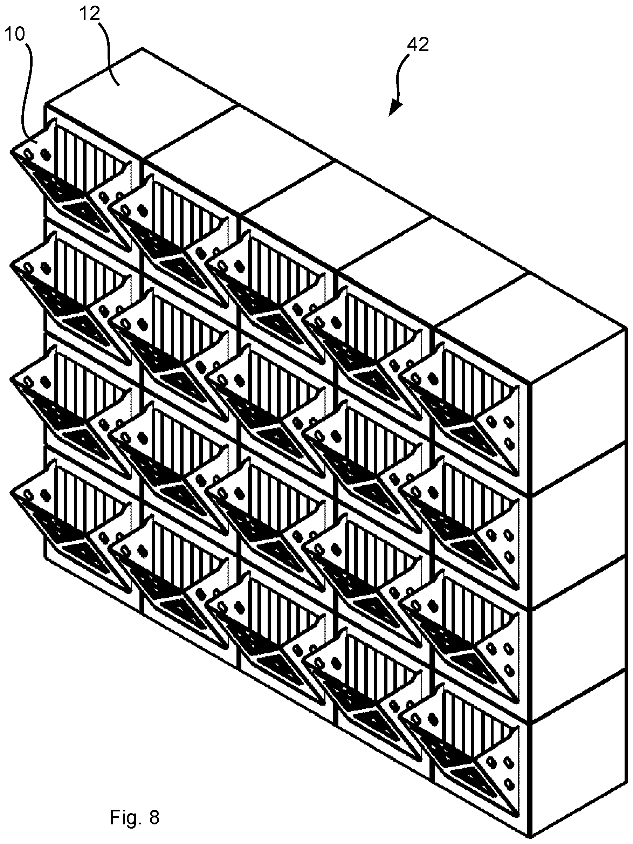

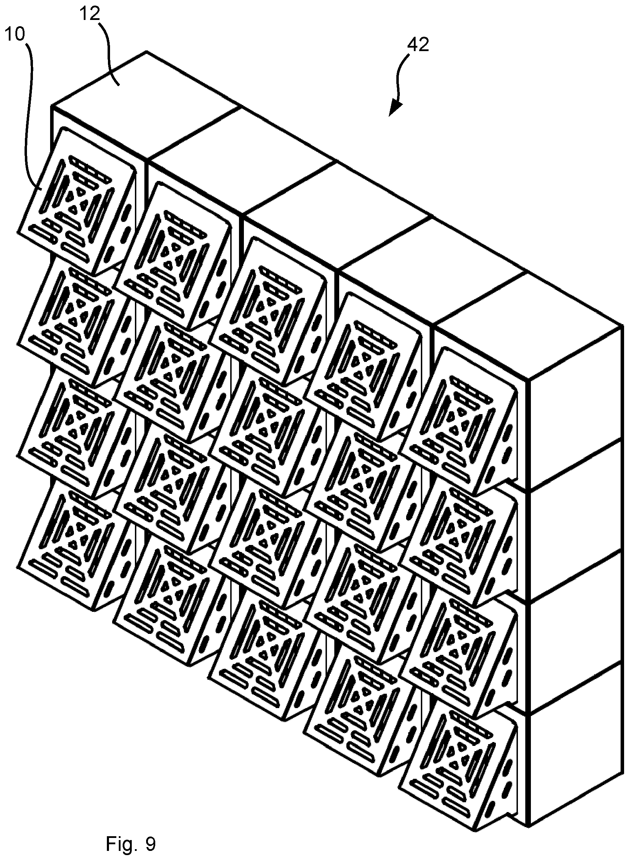

Die Darstellungen in Figur 5, Figur 6 und Figur 7 zeigen jeweils eine im Vergleich zu den bisherigen Figuren andere Ausführungsform eines Vorabscheiders 10, nämlich einen Vorabscheider 10 mit rechteckigen Seitenflächen 16, 18, und in unterschiedlichen Anbringungspositionen (Figur 5, Figur 7). Das Filtermodul 12 ist jeweils in einem das Filtermodul 12 aufnehmenden, zweiseitig offenen Gehäuse 40 platziert (das zweiseitig offene Gehäuse 40 kann auch als Rahmen oder Einhausung bezeichnet werden, ist an gegenüberliegenden Seiten offen, so dass ein durch das Filtermodul 12 hindurchtretender Luftstrom auch durch das Gehäuse 40 hindurchströmen kann). Die Möglichkeit einer Platzierung des Filtermoduls 12 in einem Gehäuse 40 gilt auch für die in Figur 3 und Figur 4 gezeigte Situation. Das Gehäuse 40 muss nicht - wie schematisch vereinfacht gezeigt - ein einzelnes Gehäuse 40 sein. Als Gehäuse 40 kann auch ein Fach in einer regalartigen Vorrichtung (Filtermodulwand 42; Figur 8, Figur 9) mit mehreren neben und/oder übereinander platzierten Fächern für jeweils ein Filtermodul 12 fungieren.

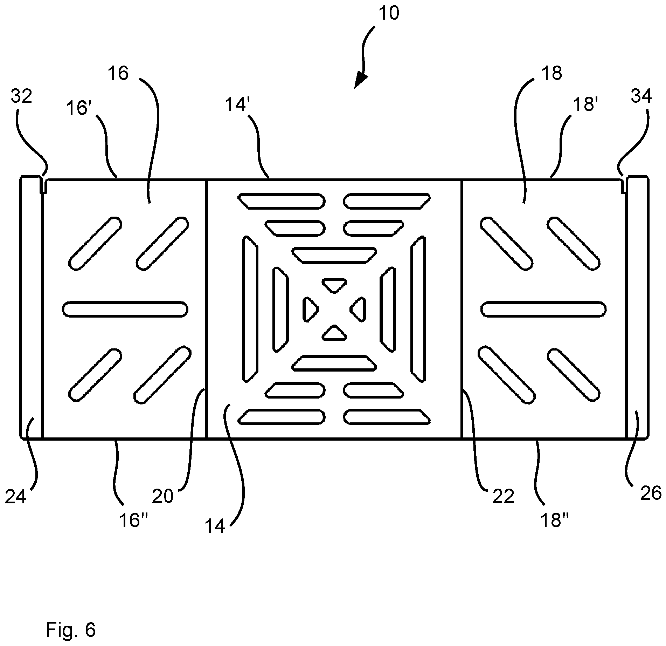

Die Darstellung in Figur 6 zeigt den Vorabscheider 10 aus Figur 5 in einer Ansicht in flacher Form. Der Vorabscheider 10 mit rechteckigen Seitenflächen 16, 18 entspricht bis auf diese Form der Seitenflächen 16, 18 und einer fehlenden Lasche 28 an der Zentralfläche 14 dem zuvor beschriebenen Vorabscheider 10, sodass zur Vermeidung unnötiger Wiederholungen auf die bisherige Beschreibung, speziell die Beschreibung zu den Figuren 1 und 2, verwiesen wird. Bei einem solchen Vorabscheider 10 ergibt sich - wie dies in der Darstellung in Figur 5 angedeutet ist - ein unterer und ein oberer Einströmbereich E (dies gilt auch für die in Figur 7 gezeigte Anbringungssituation).

Der Unterschied zwischen den Anbringungssituationen in Figur 5 und Figur 7 besteht in der Art der Anbringung des Vorabscheiders 10 außen am Filtermodul 12 (Figur 5) sowie außen vor dem Filtermodul 12 (Figur 7). Bei der in Figur 5 gezeigten Situation ist der Vorabscheider 10 in die Einströmöffnung 30 des Filtermoduls 12 eingesetzt. Dies entspricht der in Figur 3 gezeigten Situation - Anbringung außen am Filtermodul 12 -, sodass zur Vermeidung unnötiger Wiederholungen auf die dortige Beschreibung verwiesen wird. Bei der in Figur 7 gezeigten Situation ist der Vorabscheider 10 mit den Enden seiner Seitenflächen 16, 18 in einen zwischen dem Filtermodul 12 und dem das Filtermodul 12 aufnehmenden Gehäuse 40 verbleibenden Zwischenraum (Spalt) eingeführt und diese Enden sind dort zum Beispiel eingeklemmt. Dies wird im Vergleich zu einer Anbringung außen am Filtermodul (Figur 3, Figur 4, Figur 5) als Anbringung des Vorabscheiders 10 außen vor dem Filtermodul 12 bezeichnet. Es kommt es nicht darauf an, ob der Vorabscheider 10 mit dem Filtermodul 12 in Kontakt ist, sondern darauf, dass sich der Vorabscheider 10 in Strömungsrichtung eines Rohgasstroms S vor dem Filtermodul 12, nämlich außen vor dem Filtermodul 12, befindet.

Dazu und ganz allgemein ist darauf hinzuweisen, dass die Spezifikation "außen vor" allgemeiner ist als die Spezifikation "außen an". Auch ein außen am Filtermodul 12 angebrachter Vorabscheider 10 befindet sich außen vor dem Filtermodul 12 und "außen vor" meint, dass sich die zur Farbnebelabscheidung wirksamen Flächen oder Flächenabschnitte des Vorabscheiders 10 vor dem Filtermodul 12 befinden, sich also vor einer durch dessen Seitenflächen mit der Einströmöffnung 30 definierten Ebene befinden. Die Spezifikation "außen vor" bedeutet also nicht, dass sich alle Segmente oder Flächenabschnitte des Vorabscheiders 10 vor dieser Ebene befinden. Die Spezifikation "außen vor" bedeutet aber jedenfalls, dass sich die Zentralfläche 14 des Vorabscheiders 10 vor dieser Ebene befindet. Die Spezifikation "außen vor" bedeutet des Weiteren, dass sich die Seitenflächen 16, 18 oder jedenfalls wesentlichen Abschnitte der Seitenflächen 16, 18 vor dieser Ebene befinden.

Die in der Darstellung in Figur 7 gezeigte Ausführungsform des Vorabscheiders 10 benötigt keine durch jeweils eine Knickstelle von den Seitenflächen 16, 18 abgesetzten Laschen 24, 26. Vielmehr gehen die Seitenflächen 16, 18 in diese Laschen 24, 26 über und die Enden der Seitenflächen 16, 18 (die bezogen auf die Zentralfläche 14 distalen Bereiche der Seitenflächen 16, 18) sind die Laschen 24, 26.

Diese werden in den Spalt zwischen Filtermodul 12 und Gehäuse 40 eingeführt.

Wie dies in den Figuren bei der dort dargestellten beispielhaften Ausführungsform des Vorabscheiders 10 gezeigt ist, ist bei einer vorteilhaften, aber grundsätzlich optionalen Ausführungsform des Vorabscheiders 10 die Zentralfläche 14 und/oder eine oder jede Seitenfläche 16, 18 strukturiert. Bei der dargestellten Ausführungsform besteht die Strukturierung in Form von über die jeweilige Oberfläche verteilten Löchern, insbesondere Langlöchern (Ausstanzungen). Durch solche Löcher kann zumindest ein Teil des anströmenden Rohgasstroms S einströmen und an den Rändern der Löcher findet eine zusätzliche Abscheidung von vom Rohgasstrom S mitgeführten Partikeln statt.

Die Darstellungen in Figur 8 und Figur 9 zeigen eine Mehrzahl von nebeneinander und übereinander angeordneten Filtermodulen 12 mit jeweils einem außen am Filtermodul 12 angebrachten Vorabscheider 10 (jeweils nur eines bzw. nur einer bezeichnet). Diese Mehrzahl von Filtermodulen 12 bildet eine Filtermodulwand 42. Zum Erhalt einer solchen Filtermodulwand 42 können die Filtermodule 12 (oder Filtermodule 12 mit jeweils einem umgebenden Gehäuse 40; wie zum Beispiel in Figur 5 und Figur 7 gezeigt) nebeneinander und aufeinander platziert werden. Genauso können sich die Filtermodule 12 in jeweils einem eigenen Gehäuse 40 befinden (siehe ebenfalls die Darstellungen in Figur 5 und Figur 7) und eine regalartige Struktur mit nebeneinander und übereinander liegenden Fächern, die jeweils als Gehäuse 40 für genau ein Filtermodul 12 fungieren, bildet eine Basis der Filtermodulwand 42, nämlich eine Basis in Form einer beidseitig offenen

Tragstruktur mit gleich großen und in horizontaler und vertikaler Richtung regelmäßig beabstandeten Fächern.

Als Vorabscheider 10 kommen alle hier beschriebenen Ausführungsformen in Betracht. Genauso kommen alle hier beschriebenen Anbringungsmöglichkeiten jeweils eines Vorabscheiders 10 außen an oder außen vor jeweils einem Filtermodul 12 in Betracht. Die Darstellungen in Figur 8 und Figur 9 auf Basis der in Figur 3 bzw. Figur 4 gezeigten Ausführungsformen sind ausdrücklich nur Beispiele. Schließlich kommen auch Filtermodulwände 42 (mindestens eine Filtermodulwand 42) mit einer Mischkonfiguration in Betracht, also mit unterschiedlichen Vorabscheidern 10 (alle hier beschriebenen Ausführungsformen) und/oder mit unterschiedlichen Anbringungsarten/ Orientierungen (ebenfalls alle hier beschriebenen Ausführungsformen).

Die Dimension einer Filtermodulwand 42 (Anzahl von Reihen mit nebeneinander platzierten Filtermodulen 12 mit oder ohne umgebendem Gehäuse 40; Anzahl von übereinander liegenden derartigen Reihen) ist grundsätzlich beliebig und auch insoweit sind die Darstellungen in Figur 8 und Figur 9 ausdrücklich nur Beispiele.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Einzelne im Vordergrund stehende Aspekte der hier eingereichten Beschreibung lassen sich damit kurz wie folgt zusammenfassen: Angegeben wird die Verwendung einer Vorrichtung 10 zur insbesondere lösbaren Anbringung außen oder zumindest im Wesentlichen außen an einem Filter- und/oder Abscheidemodul 12. Diese Vorrichtung 10 - der Vorabscheider 10 - umfasst zumindest eine Zentralfläche 14 sowie jeweils seitlich an die Zentralfläche 14 anschließende Seitenflächen 16, 18 und die Vorrichtung 10 - der Vorabscheider 10 - ist zumindest mittels Laschen an den Enden der Seitenflächen 16, 18 am jeweiligen Filter- und/oder Abscheidemodul 12 anbringbar und wird zur Verwendung mit einem jeweiligen Filter- und/oder Abscheidemodul 12 zumindest mittels der Laschen daran angebracht.

### Bezugszeichenliste

- 10: Vorrichtung, Vorabscheider
- 12: Filter- und/oder Abscheidemodul, Filtermodul
- 14: Zentralfläche (des Vorabscheiders)
- 14': obere Kante / Oberkante (der Zentralfläche)
- 16: Seitenfläche (des Vorabscheiders)
- 16': obere Kante / Oberkante (der Seitenfläche)
- 16": untere Kante / Unterkante (der Seitenfläche)
- 18: Seitenfläche (des Vorabscheiders)
- 18': obere Kante / Oberkante (der Seitenfläche)
- 18": untere Kante / Unterkante (der Seitenfläche)
- 20: frontseitige Kante (des Vorabscheiders)
- 22: frontseitige Kante (des Vorabscheiders)
- 24: Lasche (an einer Seitenfläche)
- 26: Lasche (an einer Seitenfläche)
- 28: Lasche (an der Zentralfläche)
- 30: Einströmöffnung (am Filtermodul / in das Filtermodul)
- 32: Schlitz
- 34: Schlitz
- 40: Gehäuse
- 42: Filtermodulwand

## Patentansprüche

1. Verwendung einer Vorrichtung (10)
mit zumindest einer Zentralfläche (14) sowie jeweils seitlich an die Zentralfläche (14) anschließenden Seitenflächen (16, 18) und
mit Laschen (24, 26, 28) am freien Ende jeder Seitenfläche (16, 18) zur lösbaren Anbringung außen vor oder an einem als Farbnebelabscheider fungierenden Filter- und/oder Abscheidemodul (12) sowie in einem Strömungsweg eines bei einer bestimmungsgemäßen Verwendung des Filter- und/oder Abscheidemoduls (12) resultierenden Rohgasstroms (S) durch das Filter- und/oder Abscheidemodul (12)
zum Abscheiden von mit einem sogenannten Farbnebel mitgeführten Farb- oder Lackpartikeln,
wobei die Vorrichtung (10) mittels Laschen (24, 26, 28) am oder vor dem jeweiligen Filter- und/oder Abscheidemodul (12) angebracht wird, indem
die Laschen (24, 26, 28) in Eingriff mit einer Einströmöffnung (30) im jeweiligen Filter- und/oder Abscheidemodul (12) gebracht werden oder
die Laschen (24, 26) in einen zwischen dem Filter- und/oder Abscheidemodul (12) und einem das Filter- und/oder Abscheidemodul (12) umgebenden Gehäuse (40) verbleibenden Spalt eingesteckt werden.

2. Verwendung (10) nach Anspruch 1,
wobei bei einer zur Anbringung außen an dem jeweiligen Filter- und/oder Abscheidemodul (12) bestimmten Vorrichtung (10) deren Zentralfläche (14) eine Breite aufweist, die zumindest im Wesentlichen der Breite der Einströmöffnung (30) entspricht.

3. Verwendung nach einem der Ansprüche 1 oder 2,
wobei die Vorrichtung (10) hakenförmige Laschen (24, 26) aufweist.

4. Verwendung nach einem der Ansprüche 1 bis 3,
wobei die Vorrichtung (10) einstückig ist und insbesondere vorperforierte Knickstellen frontseitige Kanten (20, 22) der Vorrichtung (10) sowie eine Grenze zwischen der Zentralfläche (14) und jeweils einer Seitenfläche (16, 18) bilden.

5. Verwendung nach einem der Ansprüche 1 bis 4,
wobei die Vorrichtung (10) eine strukturierte Oberfläche zumindest im Bereich der Zentralfläche (14) aufweist.

## Claims

1. Use of a device (10)
comprising at least one central surface (14) as well as side surfaces (16, 18) which each adjoin the central surface (14) laterally and
comprising flaps (24, 26, 28) at the free end of each side surface (16, 18) for detachable attachment on the outside in front of or to a filter module and/or separation module (12) that functions as a paint mist separator and in a flow path of a raw gas flow (S), which results when the filter module and/or separation module (12) is used as intended, through the filter module and/or separation module (12)
for separating paint and lacquer particles entrained by what is known as a paint mist,
wherein the device (10) is attached to or in front of the relevant filter module and/or separation module (12) by means of flaps (24, 26, 28) by
the flaps (24, 26, 28) being brought into engagement with an inflow opening (30) in the relevant filter module and/or separation module (12) or
the flaps (24, 26) being inserted into a gap remaining between the filter module and/or separation module (12) and a housing (40) surrounding the filter module and/or separation module (12).

2. The use (10) according to claim 1,
wherein, in a device (10) intended for attachment to the outside of the relevant filter module and/or separation module (12), its central surface (14) has a width that at least substantially corresponds to the width of the inflow opening (30).

3. The use according to any of claims 1 or 2,
wherein the device (10) comprises hook-shaped flaps (24, 26).

4. The use according to any of claims 1 to 3,
wherein the device (10) is in one piece and, in particular, pre-perforated bend points form front-side edges (20, 22) of the device (10) and a boundary between the central surface (14) and a side surface (16, 18).

5. The use according to any of claims 1 to 4,
wherein the device (10) comprises a structured surface at least in the region of the central surface (14).

## Revendications

1. Utilisation d'un dispositif (10)
comprenant au moins une surface centrale (14) ainsi que des surfaces latérales (16, 18) latéralement contiguës à la surface centrale (14), et
comprenant des pattes (24, 26, 28) à l'extrémité libre de chaque surface latérale (16, 18) pour la fixation amovible à l'extérieur devant ou au niveau d'un module de filtrage et/ou de séparation (12) servant de séparateur de brouillard de peinture, ainsi que sur un chemin d'écoulement d'un flux de gaz brut (S) résultant lors d'une utilisation correcte du module de filtrage et/ou de séparation (12) par le module de filtrage et/ou de séparation (12)
pour séparer des particules de peinture ou de vernis entraînées par un brouillard dit de peinture,
dans laquelle le dispositif (10) est fixé au moyen de pattes (24, 26, 28) au niveau du ou devant le module de filtrage et/ou de séparation (12) respectif en ce que
les pattes (24, 26, 28) sont mises en prise avec une ouverture d'entrée (30) dans le module de filtrage et/ou de séparation (12) respectif, ou
les pattes (24, 26) sont insérées dans un interstice restant entre le module de filtrage et/ou de séparation (12) et un boîtier (40) entourant le module de filtrage et/ou de séparation (12).

2. Utilisation (10) selon la revendication 1,
dans laquelle pour un dispositif (10) destiné à être fixé à l'extérieur au module de filtrage et/ou de séparation (12) respectif la surface centrale (14) de celui-ci présente une largeur qui correspond au moins substantiellement à la largeur de l'ouverture d'entrée (30).

3. Utilisation selon l'une quelconque des revendications 1 ou 2,
dans laquelle le dispositif (10) présente des pattes (24, 26) en forme de crochet.

4. Utilisation selon l'une quelconque des revendications 1 à 3,
dans laquelle le dispositif (10) est monobloc, et en particulier des points de pliage pré-perforés forment des arêtes frontales (20, 22) du dispositif (10) ainsi qu'une limite entre la surface centrale (14) et respectivement une surface latérale (16, 18).

5. Utilisation selon l'une quelconque des revendications 1 à 4,
dans laquelle le dispositif (10) présente une surface structurée au moins dans la zone de la surface centrale (14).
